# EUROPEAN PATENT APPLICATION

(11) **EP 4 804 161 A1**
(43) Date of publication of application: **09.09.2026**
(21) Application number: 26157603.7
(22) Date of filing: 10.02.2026
(51) Int. Cl.: G08G 5/20, B64D 45/00, G01C 21/20, G01C 21/36, G06F 3/041, G08G 5/21, G08G 5/25, G08G 5/26, G08G 5/53, G08G 5/55, G08G 5/76

(54) **SYSTEM AND METHOD FOR A NAVIGATIONAL DISPLAY**

(30) Priority: 04.03.2025 IN 202511019149; 16.04.2025 US 202519180521
(71) Applicant: Honeywell International Inc., Charlotte, NC 28202 (US)
(72) Inventor: K, Nathan, Charlotte, 28202 (US); MOHIDEEN, Mohammed Ibrahim, Charlotte, 28202 (US); KODURU, Anantha Chandrasekhar, Charlotte, 28202 (US); GOVINDILLAM, Sreenivasan, Charlotte, 28202 (US); S, Anoop, Charlotte, 28202 (US)
(74) Representative: Ingrassia, Fisher & Lorenz UK Ltd.

(57) **Abstract**

A method in an aircraft during a mission, includes: predicting a turbulence region along a flight path (e.g., from radar measurements); prior to the aircraft entering the predicted turbulence region, changing a visual property (e.g., font and/or color) of a strategic entry field displayed by an HMI (human machine interface) that is predicted to need an entry while the aircraft travels through the predicted turbulence region; alerting flight crew to enter the entry to the strategic entry field displayed by the HMI prior to the aircraft entering the predicted turbulence region; preventing user input to the strategic entry field and other non-tactical field while the aerial vehicle travels through the predicted turbulence region; and allow the user input mechanism to accept an entry to a tactical entry field displayed on the display device that is predicted to need an entry while the aerial vehicle travels through the predicted turbulence region.

## Description

### CROSS REFERENCE TO RELATED APPLICATION

This application claims priority to India Provisional Patent Application No. 202511019149, filed March 4, 2025, the entire content of which is incorporated by reference herein.

### TECHNICAL FIELD

The technical field generally relates to the field of user interfaces, and more particularly relates to systems and methods for using user interfaces during instances of turbulence.

### BACKGROUND

Entering information into a user interface, such as a touch screen interface, can be challenging during a mission when high turbulence is encountered. High turbulence can cause a user or operator to make erroneous entries or other unintended entries. For example, high turbulence during flight on an aerial vehicle could make entering accurate data by a flight crew member via a touch screen interface difficult during periods of high turbulence. Also, the high turbulence could cause a flight crew member to enter data when data entry was not intended.

Hence, it is desirable to provide systems and methods for improving data entry during missions when high turbulence can occur. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In some aspects, the techniques described herein relate to an aerial vehicle, including: a display device; a user input mechanism; and a controller configured during a mission to: predict a turbulence region along a flight path of the aerial vehicle (e.g., from radar measurements); prior to the aerial vehicle entering the predicted turbulence region, cause a font or color for a strategic entry field displayed on the display device that is predicted to need an entry using the user input mechanism while the aerial vehicle travels through the predicted turbulence region to appear different from a font or color for a non-strategic entry field displayed on the display device that is predicted to not need an entry using the user input mechanism while the aerial vehicle travels through the predicted turbulence region; provide an alert to enter the entry to the strategic entry field displayed on the display device prior to the aerial vehicle entering the predicted turbulence region; and prevent the user input mechanism from accepting an entry to the strategic entry field while the aerial vehicle travels through the predicted turbulence region.

In some aspects, the techniques described herein relate to an aerial vehicle, including: an HMI (human machine interface) including a display device and a user input mechanism; and a controller configured during a mission to: predict a turbulence region along a flight path of the aerial vehicle (e.g., from radar measurements); and while the aerial vehicle travels through the predicted turbulence region: cause a font or color for a non-tactical entry field displayed on the display device that is predicted to not need an entry using the user input mechanism while the aerial vehicle travels through the predicted turbulence region to appear different from the font or color for a tactical entry field displayed on the display device that is predicted to need an entry using the user input mechanism while the aerial vehicle travels through the predicted turbulence region; prevent the user input mechanism from accepting an entry to the non-tactical entry field; and allow the user input mechanism to accept an entry to a tactical entry field displayed on the display device that is predicted to need an entry while the aerial vehicle travels through the predicted turbulence region.

In some aspects, the techniques described herein relate to a method in an aircraft during a mission, including: predicting a turbulence region along a flight path (e.g., from radar measurements); prior to the aircraft entering the predicted turbulence region, changing a visual property (e.g., font and/or color) of a strategic entry field displayed by an HMI (human machine interface) that is predicted to need an entry while the aircraft travels through the predicted turbulence region; alerting flight crew to enter the entry to the strategic entry field displayed by the HMI prior to the aircraft entering the predicted turbulence region; and preventing user input to the strategic entry field while the aerial vehicle travels through the predicted turbulence region.

Furthermore, other desirable features and characteristics will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram depicting an example flight environment in which systems, methods, and other aspects of the present disclosure may be implemented, in accordance with various embodiments.
FIG. 2 is a block diagram depicting example aircraft systems in an aircraft, in accordance with various embodiments.
FIG. 3 is a block diagram depicting an example display system on an aerial vehicle that includes a turbulence display controller, in accordance with various embodiments.
FIG. 4 is a process flow chart depicting an example process for identifying turbulence events, in accordance with various embodiments.
FIG. 5 is a process flow chart depicting an example process for protecting against erroneous inputs during high turbulence and/or wind shear events, in accordance with various embodiments.
FIG. 6 is a diagram depicting an example application of an approach of FIG. 5 on a UI, in accordance with various embodiments.
FIG. 7 is a diagram depicting an example application of an approach of FIG. 5 on a UI, in accordance with various embodiments.
FIG. 8 is a diagram depicting an example application of an approach of FIG. 5 on a secondary display, in accordance with various embodiments.
FIG. 9 is a process flow chart depicting an example process in an aircraft, in accordance with various embodiments.

### DETAILED DESCRIPTION

The following detailed description is merely exemplary in nature and is not intended to limit the invention or the application and uses of the invention. As used herein, the words "exemplary" and "example" mean "serving as an example, instance, or illustration." Thus, any embodiment described herein as "exemplary", or "example" are not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Turbulence, which is a measure of wind variance in the atmosphere, can impact aircraft missions in many ways, including passenger discomfort, flight stability, and operating cockpit controls hosted on devices such as touch screen control devices. The subject matter described herein discloses apparatus, systems, techniques and articles for predicting the occurrence and intensity of turbulence ahead of time and adjusting cockpit controls to avoid hazards of operating cockpit controls, such as inadvertent touches, during turbulence events. The disclosed apparatus, systems, techniques and articles may be implemented separate from, or integrated within, a preexisting mobile platform management system, avionics system, or aircraft flight management system (FMS).

The subject matter described herein discloses apparatus, systems, techniques and articles for both predictive and avoidance way of protection from spurious and unintentional touch inputs at times of turbulence. In various embodiments, weather data from radar is used to detect potential turbulence events and touch screen input can either be avoided (in zone of disturbance) or strategically entered (before the zone of disturbance).

The subject matter described herein discloses apparatus, systems, techniques and articles wherein data sensed from various flight deck units are integrated to derive unique insights for protecting against accidental flight deck entry errors during turbulence events. The subject matter described herein discloses apparatus, systems, techniques and articles that can improve data entry accuracy with touch screen systems. The subject matter described herein discloses apparatus, systems, techniques and articles for reducing erroneous data entries via multiple means.

While this disclosure describes apparatus, systems, techniques and articles with reference to aircraft, it should be appreciated that the present apparatus, systems, techniques and articles may be applicable to various other vehicles, including those of drones, automobiles, ships, spacecraft, or any other manned, unmanned, autonomous, and/or internet-connected vehicles.

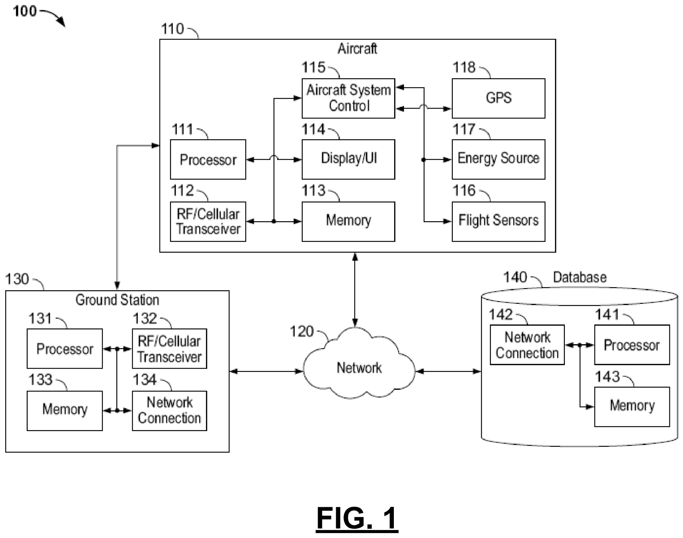

FIG. 1 is a block diagram depicting an example flight environment 100 in which systems, methods, and other aspects of the present disclosure may be implemented. The flight environment 100 of FIG. 1 may include an aircraft 110, a network 120, one or more ground stations 130, and a database 140. Aircraft 110 may include processor 111 in communication with a plurality of other components such as RF/cellular transceiver 112, memory 113, display/user interface (UI) 114, aircraft control system 115, flight sensors 116, energy source 117, and GPS 118. Processor 111 may include one or more processors that comprise the computing and flight management systems of aircraft 110. Memory 113 may be one or more components configured to store data related to aircraft 110, including instructions for operating flight components and aircraft systems (e.g., autopilot, route planning, communication). Processor 111 and memory 113 may display information to and receive inputs from an operator of the aircraft 110 via the display/Ul 114. The display/UI 114 may include any suitable type, such as one or more monitors, touchscreen panels, heads-up displays, heads-down displays, primary flight displays (PFDs), navigation displays, and others, and may include operator input devices such as joysticks, buttons, touch-responsive panels, mice, trackpads, voice recognition devices, and the like.

The aircraft 110 can include an aircraft control system 115 to serve as the controller of flight components and aircraft systems (e.g., control surfaces, propulsion, energy generation/management). In some embodiments, the aircraft control system 115 may communicate with a GPS 118 to, for example, locate the aircraft 110 in the airspace; an energy source 117 to, for example, manage aircraft range and speed; and flight sensors 116 to, for example, monitor the operating and flight characteristics of aircraft 110. Without deviating from the scope of this disclosure, the aircraft 110 may have additional elements that can be in communication with the aircraft control system 115 and/or processor 111.

The aircraft 110 may use an RF/cellular transceiver 112 to communicate with other elements of the system environment, for example, via the network 120 or directly by radio communication. The network 120 may be implemented as, for example, the Internet, a wireless network, Bluetooth, Near Field Communication (NFC), or any other type of network or combination of networks that provides communications between one or more components of the flight environment 100. In some embodiments, the network 120 may be implemented using a suitable communication protocol or combination of protocols such as a wired or wireless Internet connection in combination with a cellular data network.

To aid and/or guide the aircraft 110, one or more ground stations 130 may provide the aircraft 110 with information, such as information regarding air traffic, weather conditions, and/or other useful information for the flight of aircraft 110. A ground station 130 may include a processor 131, an RF/cellular transceiver 132, memory 133, and network connection 134. Processor 131 and memory 133 may collect and transmit information via RF/cellular transceiver 132 and/or network connection 134. Ground station 130 may be in communication with, for example, air traffic control, meteorologists, and one or more databases 140.

One or more databases 140 may be repositories for system information such as map data, building data, flight plan data, and the like. Database 140 may include a processor 141, a network connection 142, and a memory 143. Memory 143 may store data, processor 141 may access and organize the stored data to respond to requests and provide updates to the stored data, and information may be provided to other elements in flight environment 100 via network connection 142. In some embodiments, database 140 may communicate directly with aircraft 110 via network 120. Further, ground station 130 may be able to relay requests for information from aircraft 110 to database 140 via one or more of its RF/cellular transceivers 132 and network connection 134.

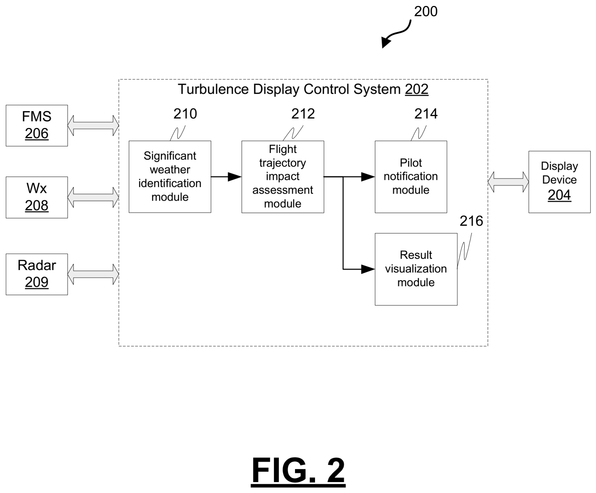

FIG. 2 is a block diagram depicting example aircraft systems 200 in an aircraft. The example aircraft systems 200 include a turbulence display control system 202, a display device 204 such as a multi-function control and display unit or a touchscreen control system, avionics systems 206, a weather/framework service interface 208, and a radar system 209. The avionics systems 206 may include a variety of flight deck systems such as a flight management system (FMS), a flight director (FD) system, a communication management function (CMF), a maintenance system, communication/navigation systems, radio systems, central maintenance computers (CMCs), forward display control systems, and other avionics systems, to list but a few examples.

The weather/framework service interface 208 is configured to retrieve real-time flight condition data for use during flight or mission planning from external weather/framework service provider(s). The flight condition data may include information regarding obstacles, atmospheric conditions, wind, air traffic, schedules, and others that the flight crew may encounter or need to know about during flight. External weather service provider(s) may include any service provider (e.g., Sirius XM or GoDirect Weather) that offers a strategic weather solution that can provide weather data for integrated avionics products (e.g., Uplink Weather for INAV or GoDirect Weather for INAV) and/or EFB applications (e.g., Flight Bag Pro or Weather Information Service).

The radar system 209 uses radio waves to determine the distance (ranging), direction (azimuth and elevation angles), and radial velocity of objects relative to the aircraft. The radar system 209 may be used to detect and track aircraft, ships, spacecraft, guided missiles, motor vehicles, map weather formations, and terrain. The radar system 209 may be configured for quantifying and classifying predicted turbulence based on class (wing load) of the aircraft.

The example turbulence display control system 202 is configured to analyze weather data (e.g., atmospheric conditions, wind, etc.) received from weather/framework service provider(s) via the weather/framework service interface 208 and/or radar data received from the radar system 209, provide the flight crew with summary information highlighting the most significant weather conditions that may impact the aircraft during flight (in some cases), and provide a predictive and/or avoidance way of protection from spurious and unintentional touch inputs at times of turbulence. When providing a predictive way of protection from spurious and unintentional touch inputs during times of turbulence, the turbulence display control system 202 may be configured to request and allow the entry of strategic data before the aircraft reaches a predicted turbulence zone and, in some cases, prevent entry of certain data during the predicted turbulence zone. When providing an avoidance way of protection from spurious and unintentional touch inputs during times of turbulence, the turbulence display control system 202 is configured to restrict data entry to certain tactical data (if any) during flight while in a turbulence zone.

The turbulence display control system 202 is configured to use weather data from weather/framework service provider(s) and/or radar data from on-aircraft radar systems 209 to detect potential turbulences and provide an appropriate alert so that touchscreen (TSC) input can either be avoided (in the zone of disturbance) or strategically entered (before the zone of disturbance). The example turbulence display control system 202 includes a significant weather identification module 210, a flight trajectory impact assessment module 212, a pilot notification module 214, and a display control module 216.

The significant weather identification module 210 is configured to review strategic weather data received on the aircraft, for example via the weather/framework service interface 208 and/or tactical weather data from tactical weather sources, such as radar system 209, and identify current significant weather events from the strategic weather data and/or tactical weather data. In one example, significant weather events are the subset of available weather events that can potentially have a significant impact on flight and require the flight crew's active awareness.

The flight trajectory impact assessment module 212 is configured to determine whether current significant weather events have the potential to impact the aircraft during its projected flight path. To determine the potential impact to the aircraft's flight path, the example flight trajectory impact assessment module 212 is configured to filter out, from the current significant weather events, potentially significant weather events from a weather impacted area that will not be intersected by a geographical corridor around the projected flight path and filter out, from the current significant weather events, potentially significant weather events that will not exist within the time frame during which the aircraft is planned to pass through the weather impacted area.

The assessment of impact on flight trajectory is performed by the example flight trajectory impact assessment module 212 every time new weather data set is received, for example from the weather/framework service interface 208. To perform the assessment, the example flight trajectory impact assessment module 212 considers the strategic weather data set, flight plan (e.g., from flight deck equipment such as the FMS), aircraft systems status (e.g., from flight deck equipment such as the CMCs), and configurable flight crew's preferences for significant weather advisory that are set in advance (e.g., before flight) by the flight crew. In some examples, the example flight trajectory impact assessment module 212 may also consider the tactical weather data.

The pilot notification module 214 is configured to generate a notification for display to the flight crew via an onboard notification system that identifies the detected significant change in weather when a significant change in weather is detected. The notification may include the type of weather phenomenon occurrence, level of the weather phenomenon occurrence, estimated time to reach the affected location, and a selectable link for providing more detailed information regarding the weather phenomenon occurrence when selected.

The display control module 216 is configured to provide a predictive and/or avoidance way of protection from spurious and unintentional touch inputs at times of turbulence. When providing a predictive way of protection from spurious and unintentional touch inputs during times of turbulence, the display control module 216 may be configured to request and allow the entry of strategic data before the aircraft reaches a predicted turbulence zone and, in some cases, prevent entry of certain data during the predicted turbulence zone. When providing an avoidance way of protection from spurious and unintentional touch inputs during times of turbulence, the display control module 216 is configured to restrict data entry to certain tactical data (if any) during flight while in a turbulence zone.

In various embodiments, when the aircraft encounters/passes through a turbulence event and/or a wind shear event that exceeds a predefined and configured threshold, the display control module 216 adapts to such scenario, whereby it prioritizes, resize/reorganize the graphical menu buttons such that the crew can easily maneuver through the applicable menu options. In various embodiments, user interactions can be minimized unless for inevitable tactical operations. These limited operations can reduce the errors in pilot interactions with the user interface during critical phases of flight.

In various embodiments, the display control module 216 is configured to: prior to the aerial vehicle entering a predicted turbulence region, cause a font or color for a strategic entry field displayed on a display device that is predicted to need an entry using a user input mechanism while the aerial vehicle travels through the predicted turbulence region to appear different from a font or color for a non-strategic entry field displayed on the display device that is predicted to not need an entry using the user input mechanism while the aerial vehicle travels through the predicted turbulence region; provide an alert (e.g., visual, audible, haptic, etc.) to enter the entry to the strategic entry field displayed on the display device prior to the aerial vehicle entering the predicted turbulence region; and prevent the user input mechanism from accepting an entry to the strategic entry field while the aerial vehicle travels through the predicted turbulence region. In various embodiments, a strategic entry field is a field in which data can be entered in advance of traveling through a predicted turbulence region.

In various embodiments, to cause the font or color for a strategic entry field to appear different from the font or color for a non-strategic entry field, the display control module 216 is configured to change the font or color for the strategic entry field prior to the aerial vehicle entering the predicted turbulence region.

In various embodiments, to cause the font or color for a strategic entry field to appear different from the font or color for a non-strategic entry field, the display control module 216 is configured to change the font or color for the non-strategic entry field prior to the aerial vehicle entering the predicted turbulence region.

In various embodiments, the display control module 216 is configured to: while the aerial vehicle travels through the predicted turbulence region, cause a font or color for a non-tactical entry field displayed on the display device that is predicted to not need an entry using the user input mechanism while the aerial vehicle travels through the predicted turbulence region to appear different from the font or color for a tactical entry field displayed on the display device that is predicted to need an entry using the user input mechanism while the aerial vehicle travels through the predicted turbulence region; prevent the user input mechanism from accepting an entry to the non-tactical entry field; and allow the user input mechanism to accept an entry to a tactical entry field displayed on the display device that is predicted to need an entry while the aerial vehicle travels through the predicted turbulence region. In various embodiments, a tactical entry field is a field in which data needs to be entered during a period during which the aircraft travels through a predicted turbulence region.

In various embodiments, the display control module 216 is further configured to identify a tactical entry field that receives an entry while the aircraft travels through the predicted turbulence region, and responsive to the entry to the tactical entry field while the aircraft travels through the predicted turbulence region, provide an alert (e.g., audible, haptic, visual on a different display, etc.) alert that identifies the tactical entry field.

In various embodiments, to cause the font or color for a non-tactical entry field to appear different from the font or color for a tactical entry field, the display control module 216 is configured to change the font or color for the non-tactical entry field. In various embodiments, to cause the font or color for a non-tactical entry field to appear different from the font or color for a tactical entry field, the display control module 216 is configured to change the font or color for the tactical entry field.

The turbulence display control system 202 includes a turbulence display controller that is configured to implement the significant weather identification module 210, flight trajectory impact assessment module 212, pilot notification module 214, and display control module 216.

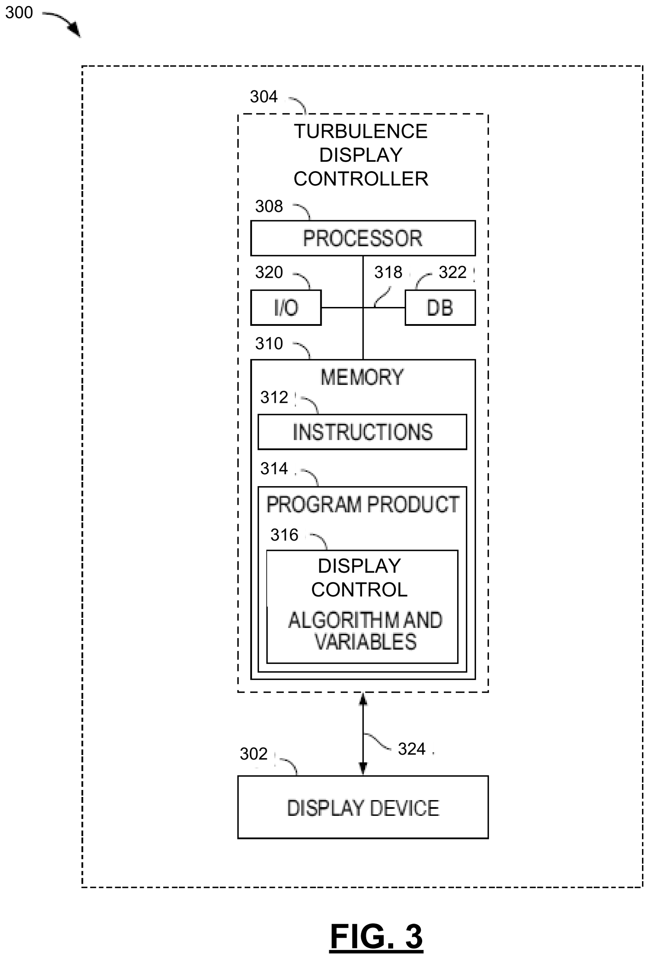

FIG. 3 is a block diagram depicting an example display system 300 on an aerial vehicle that includes a turbulence display controller. The example display system 300 may be implemented on an aerial vehicle, such as a non-commercial aircraft, a commercial aircraft, a military aircraft, a helicopter, an eVTOL (electric Vertical Take-off and Landing vehicle), a VTOL (Vertical Take-off and Landing vehicle), or other manned vehicle.

The example display system 300 includes a UI 302 (such as a primary flight display (PFD), a portable electronic device (PED), such as a laptop computer, tablet computer, smartphone, or other PED, and/or other display/Ul 114/204), and a turbulence display controller 304. The UI 302 has at least one display unit and at least one user input mechanism. In various embodiments, the UI 302 includes a touchscreen device having at least one touchscreen display as a display unit and a touchscreen surface as a user input mechanism. In various embodiments, the UI 302 includes a mouse and/or keyboard as user input mechanisms. In various embodiments, the UI 302 may include other physical controls, such as knobs, wheels, inceptors, sticks, or others.

The example turbulence display controller 304 includes a processing component comprising at least one processor 308 and a computer-readable storage device or media (such as memory 310) encoded with programming instructions for configuring the processing component. The processor 308 may comprise any type of processor or multiple processors, any custom-made or commercially available processor, a central processing unit (CPU), a graphics processing unit (GPU), an application specific integrated circuit (ASIC), a field programmable gate array (FPGA), an auxiliary processor among several processors associated with the processing component, a semiconductor-based microprocessor (in the form of a microchip or chip set), any combination thereof, or generally any device for executing instructions to carry out the described operations, tasks, and functions by manipulating electrical signals representing data bits at memory locations in system memory, as well as other processing of signals.

The computer readable storage device or media (e.g., memory 310) may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the processing component. The memory 310 may be located on and/or co-located on the same computer chip as the processor 308. Generally, the memory 310 maintains data bits and may be utilized by the processor 308 as storage and/or a scratch pad during operation. Specifically, the memory 310 stores instructions and applications 312. Information in the memory 310 may be organized and/or imported from an external source during an initialization step of a process; it may also be programmed via a user input device (e.g., associated with the UI 302). During operation, the processor 308 loads and executes one or more programs, algorithms and rules embodied as instructions and applications 312 contained within the memory 310 and, as such, controls the general operation of the turbulence display controller 304.

The memory 310 includes a novel program 316 that includes rules and instructions that, when executed, convert the processing component (e.g., processor 308/memory 310) configuration into the turbulence display controller 304, which is a novel controller that performs the functions, techniques, and processing tasks associated with controlling the entry of data to the UI 302. The novel program 316 may be configured to cause the turbulence display controller 304 to provide a predictive and/or avoidance way of protection from spurious and unintentional touch inputs at times of turbulence. The novel program 316 and associated stored variables may be stored in a functional form on computer readable media, for example, as depicted, in memory 310. While the depicted exemplary embodiment of the turbulence display controller 304 is described in the context of a fully functioning computer system, those skilled in the art will recognize that the mechanisms of the present disclosure are capable of being distributed as a program product 314.

As a program product 314, one or more types of non-transitory computer-readable signal bearing media may be used to store and distribute the program 316, such as a non-transitory computer readable medium bearing the program 316 and containing therein additional computer instructions for causing a computer processor (such as the processor 308) to load and execute the program 316. Such a program product 314 may take a variety of forms, and the present disclosure applies equally regardless of the type of computer-readable signal bearing media used to carry out the distribution. Examples of signal bearing media include recordable media such as floppy disks, hard drives, memory cards and optical disks, and transmission media such as digital and analog communication links. It will be appreciated that cloud-based storage and/or other techniques may also be utilized as memory 310 in certain embodiments.

In various embodiments, the processing component (e.g., processor 308/memory 310) configuration of the turbulence display controller 304 may be communicatively coupled (via a bus 318) to an input/output (I/O) interface 320, and a database 322. The bus 318 serves to transmit programs, data, status and other information or signals between the various components of the turbulence display controller 304. The bus 318 can be any suitable physical or logical means of connecting computer systems and components. This includes, but is not limited to, direct hardwired connections, fiber optics, infrared and wireless bus technologies.

The I/O interface 320 enables intra controller communication, as well as communication between the turbulence display controller 304 and other system components (such as a UI 302) via the communication system and fabric 324 and between the turbulence display controller 304 and external data sources via the communication system and fabric 324. The I/O interface 320 may include one or more network interfaces and can be implemented using any suitable method and apparatus. In various embodiments, the I/O interface 320 is configured to support communication from an external system driver and/or another computer system. In one embodiment, the I/O interface 320 is integrated with the communication system and fabric 324 and obtains data from external data source(s) directly. Also, in various embodiments, the I/O interface 320 may support communication with technicians, and/or one or more storage interfaces for direct connection to storage apparatuses, such as the database 322. In some embodiments, the database 322 is part of the memory 310. In various embodiments, the database 322 is integrated, either within the turbulence display controller 304 or external to it.

In various embodiments, the turbulence display controller 304 is configured to: prior to the aerial vehicle entering a predicted turbulence region, cause a font or color for a strategic entry field displayed on a display device that is predicted to need an entry using a user input mechanism while the aerial vehicle travels through the predicted turbulence region to appear different from a font or color for a non-strategic entry field displayed on the display device that is predicted to not need an entry using the user input mechanism while the aerial vehicle travels through the predicted turbulence region; provide an alert (e.g., visual, audible, haptic, etc.) to enter the entry to the strategic entry field displayed on the display device prior to the aerial vehicle entering the predicted turbulence region; and prevent the user input mechanism from accepting an entry to the strategic entry field while the aerial vehicle travels through the predicted turbulence region. In various embodiments, a strategic entry field is a field in which data can be entered in advance of traveling through a predicted turbulence region.

In various embodiments, the turbulence display controller 304 is configured to: while the aerial vehicle travels through the predicted turbulence region, cause a font or color for a non-tactical entry field displayed on the display device that is predicted to not need an entry using the user input mechanism while the aerial vehicle travels through the predicted turbulence region to appear different from the font or color for a tactical entry field displayed on the display device that is predicted to need an entry using the user input mechanism while the aerial vehicle travels through the predicted turbulence region; prevent the user input mechanism from accepting an entry to the non-tactical entry field; and allow the user input mechanism to accept an entry to a tactical entry field displayed on the display device that is predicted to need an entry while the aerial vehicle travels through the predicted turbulence region. In various embodiments, a tactical entry field is a field in which data needs to be entered during a period during which the aircraft travels through a predicted turbulence region.

In various embodiments, the turbulence display controller 304 is further configured to identify a tactical entry field that receives an entry while the aircraft travels through the predicted turbulence region, and responsive to the entry to the tactical entry field while the aircraft travels through the predicted turbulence region, provide an alert (e.g., audible, haptic, visual on a different display, etc.) alert that identifies the tactical entry field.

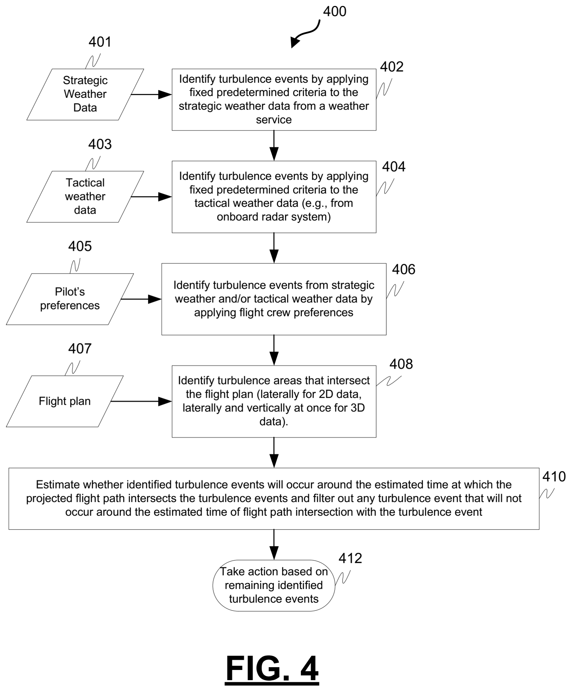

FIG. 4 is a process flow chart depicting an example process 400 (that may be performed using the turbulence display controller 304) for identifying turbulence events. The process 400 includes identifying turbulence events in a number of different stages, each of which may be performed in parallel or in varying orders.

At 402, the process 400 includes identifying turbulence events by applying fixed predetermined criteria to strategic weather data 401 (e.g., atmospheric conditions, wind, etc. received from weather/framework service provider(s)). In various embodiments, the strategic weather data 401 may be provided by one or more of connected weather sources, ground based weather services, NEXRAD data, and other sources off the aircraft.

At 404, the process 400 includes identifying turbulence events by applying fixed predetermined criteria to tactical weather data 403. In various embodiments, the tactical weather data 403 may be provided by one or more of weather radar, LIDAR, EGPWS, and other systems onboard the aircraft.

At 406, the process 400 includes identifying turbulence events by applying flight crew preferences 405 (e.g., that are identified pre-flight and stored in a configuration file) to strategic weather data 401 and/or tactical weather data 403.

To assess the impact of the identified turbulence events on flight trajectory, the process 400, at 408, includes identifying areas predicted to experience the identified significant turbulence events that intersect the projected flight path (e.g., laterally for 2D data, laterally and vertically at once for 3D data) based on the flight plan 407 and filter out identified turbulence events in areas that are not predicted to intersect the projected flight path.

The process 400 further includes, at 410, estimating whether remaining identified turbulence events will occur around the estimated time at which the projected flight path intersects the turbulence events and filter out any turbulence event that will not occur around the estimated time of flight path intersection with the turbulence event.

The process 400, at 412, includes taking action based on the remaining identified turbulence events.

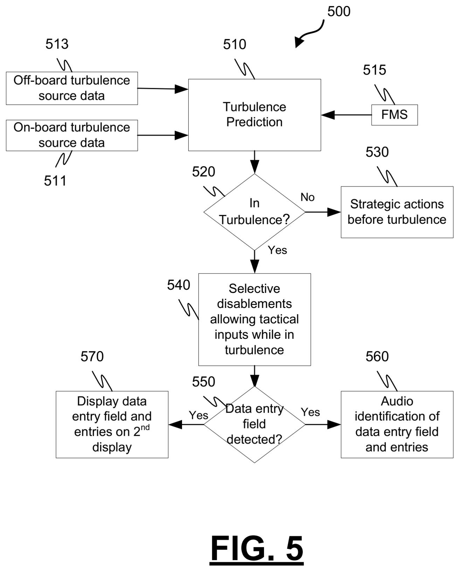

FIG. 5 is a process flow chart depicting an example process 500 (that may be performed using the turbulence display controller 304) for protecting against erroneous inputs during high turbulence and/or wind shear events. The order of operation within the process 500 is not limited to the sequential execution as illustrated in the figure but may be performed in one or more varying orders as applicable and in accordance with the present disclosure.

At 510, the process 500 includes predicting future turbulence periods. The future turbulence periods may be predicted based on predicted turbulence areas determined from onboard-turbulence source data 511 and/or offboard turbulence source data 513 and based on a determination from aircraft data such as FMS data 515 whether the aircraft is predicted to travel through the predicted turbulence areas while the predicted turbulence is active. In various embodiments, the onboard turbulence source data 511 may be provided by one or more of weather radar, LIDAR, EGPWS, and other systems onboard the aircraft. In various embodiments, the offboard turbulence source data 511 may be provided by one or more of connected weather sources, ground based weather services, NEXRAD data, and other sources off the aircraft. In various embodiments, the onboard turbulence source data 511 (e.g., weather radar-based data) is interpreted for anticipated turbulence. In some embodiments, the offboard turbulence source data 513 is interpreted for anticipated turbulence. In other embodiments, both the onboard turbulence source data 511 and the offboard turbulence source data 513 are interpreted for anticipated turbulence. Based on turbulence drift, aircraft speed and distance, the probability of turbulence encounter (POTE) may be calculated.

At 510, the process 500 may also include predicting strategic input fields prior to the aircraft entering the predicted turbulence area. At 510, the process 500 may also include predicting tactical input infields prior to the aircraft entering the predicted turbulence area. In various embodiments, the predicted strategic input fields are fields for data that may be used by an aircraft system when the aircraft is in the predicted turbulence area and that can be entered prior to the aircraft entering the predicted turbulence area. In various embodiments, the tactical input fields are fields requiring input while the aircraft is in the predicted turbulence area.

At 520, the method includes determining if the aircraft is in turbulence. If a turbulence area has not been reached (no at 520), the method includes, at 530, taking strategic actions before turbulence area reached. The strategic actions include prompting for strategic input from strategic input fields before the aircraft reaches the predicted turbulence area (e.g., visual prompt, audio prompt, haptic prompt, etc.); and accepting strategic input from strategic input fields before the aircraft reaches the predicted turbulence area. In various embodiments, taking strategic actions also comprises predicting strategic input fields prior to prompting for strategic input. In various embodiments, the strategic actions may also include changing the font and color of strategic input fields to indicate strategic inputs, and converting entry fields to read only when a turbulence area is reached until the aircraft has passes through the turbulence area. In various embodiments, the timing and other parameters of the strategic actions can be configured based on the mission phase. For example, during cruise, the arrival entry can be disabled based on the distance to the top of descent.

At 540 (responsive to yes at 520), the method includes taking tactical actions comprising selective disablement of input fields while the aircraft is in the turbulence area. In various embodiments, selective disablement of input fields includes disabling non-tactical input fields for data entry while the aircraft is in the turbulence area. In various embodiments, taking tactical actions further comprises enabling tactical fields for data entry while the aircraft is in the turbulence area. In some embodiments, taking tactical actions comprises determining the fields (e.g., tactical fields) that will need an entry while the aerial vehicle travels through the turbulence region and enabling only those fields for data entry while the aerial vehicle travels through the turbulence region. In some embodiments, taking tactical actions comprises determining the fields (e.g., non-tactical fields) that will not need an entry while the aerial vehicle travels through the turbulence region and disabling only those fields for data entry while the aerial vehicle travels through the turbulence region. In various embodiments, selective disablement of input fields while the aircraft is in the turbulence area includes disabling all entry fields with the exception of tactical entry fields, wherein the tactical entry fields are fields requiring input while the aircraft is in the turbulence area. This may include converting all entry fields except for tactical entry fields to read only until the aircraft has passed through the turbulence area, changing the font and/or color of the fields while in the turbulence area, disabling entries except a few tactical ones. In various embodiments, the timing and other parameters of the tactical actions can be configured based on the mission phase. The disabled fields are left as read only, facilitating situational awareness. For example, the HSI can be left as read only with refresh while in long range navigation, but while in approach it is left enabled.

At 550, the method includes determining whether data entry is being attempted to a tactical entry field during turbulence. When data entry is attempted, the method at 560 includes identifying an intended field for data entry and providing an audio annunciation identifying the intended field for data entry (e.g., "Entering cruise altitude", "Updating speed", etc.). In various embodiments, an audio annunciation of the data entered into intended field may also be provided.

When data entry is attempted, the method at 570 includes identifying an intended field for data entry and displaying on another display (such as a HUD) a visual annunciation identifying the intended field for data entry. In various embodiments, a visual annunciation of the data entered into intended field may also be provided ( e.g., "CRUISE ALTITUDE 39000 ft", "DESCENT SPEED 340 kts", etc.).

One of more of the approaches from 530, 540, 560, and/or 570 may be utilized to mitigate the impact of vibration associated with turbulence. These approaches may be applied to different types of Uls such as touchscreen controllers and interactive Display Units.

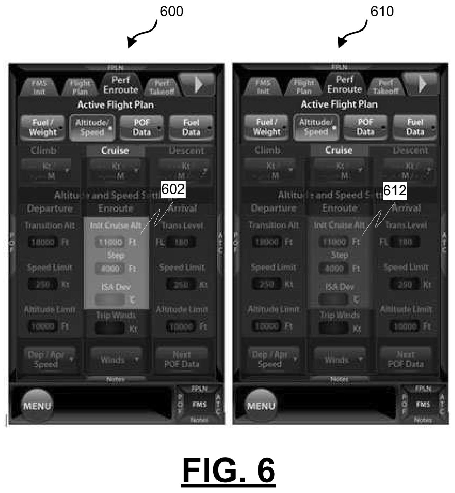

FIG. 6 is a diagram depicting an example application of approach 530 of FIG. 5 on a UI. UI 600 illustrates that strategic inputs will be allowed to strategic input fields 602 prior to the predicted turbulent region and with other input fields disabled. UI 610 illustrates strategic input fields 612 that are disabled during the predicted turbulent region. The strategic input fields 602 are shown using a different visual scheme than the strategic input fields 612 indicating to a user that the entries can be made to strategic input fields 602 but not to strategic input fields 612. In various embodiments, after strategic fields are entered, they may be disabled for further entries.

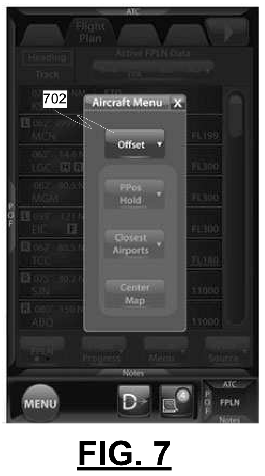

FIG. 7 is a diagram depicting an example application of approach 540 of FIG. 5 on a UI. The tactical fields 702 that are anticipated to need entries "while in turbulence", are enabled and the rest of the data fields are disabled. In this example, the tactical fields 702 are made to be visually distinct by increasing their font size and/or color. For instance, the offset entry is enabled, and the rest of the data entries are disabled.

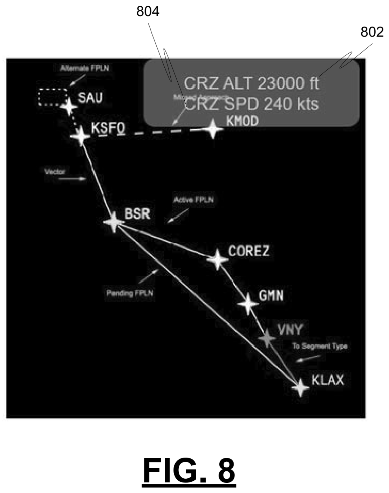

FIG. 8 is a diagram depicting an example application of approach 560 and approach 570 of FIG. 5 on a different display. In this example, entered data 802 and entered data 804 are displayed on a head up or forward display for making the crew aware of the entries, while entry is in progress. Also, the data is presented audibly over an aircraft intercom system.

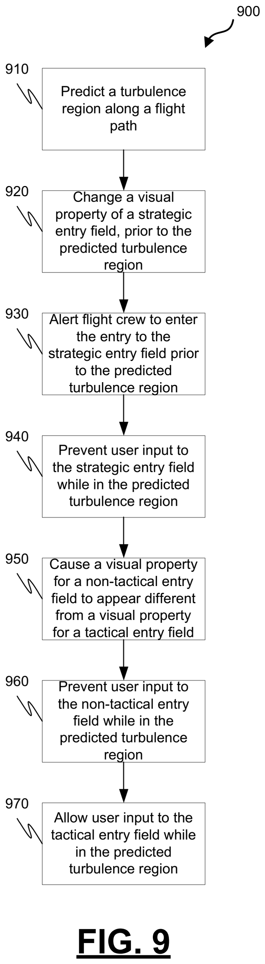

FIG. 9 is a process flow chart depicting an example process 900 in an aircraft. The order of operation within the process 900 is not limited to the sequential execution as illustrated in the figure, but may be performed in one or more varying orders as applicable and in accordance with the present disclosure.

At step 910, the process 900 includes predicting a turbulence region along a flight path (e.g., from radar measurements).

At step 920, the process 900 includes prior to the aircraft entering the predicted turbulence region, changing a visual property (e.g., font and/or color) of a strategic entry field displayed by an HMI (human machine interface) that is predicted to need an entry while the aircraft travels through the predicted turbulence region.

At step 930, the process 900 includes alerting flight crew to enter the entry to the strategic entry field displayed by the HMI prior to the aircraft entering the predicted turbulence region.

At step 940, the process 900 includes preventing user input to the strategic entry field while the aerial vehicle travels through the predicted turbulence region.

At step 950, the process 900 includes while the aerial vehicle travels through the predicted turbulence region: causing a visual property (e.g., font and/or color) for a non-tactical entry field displayed on the HMI that is predicted to not need an entry while the aerial vehicle travels through the predicted turbulence region to appear different from a visual property (e.g., font and/or color) for a tactical entry field displayed on the HMI that is predicted to need an entry while the aerial vehicle travels through the predicted turbulence region. In various embodiments, causing a visual property for a non-tactical entry field to appear different from a visual property for a tactical entry field includes changing the font or color for the non-tactical entry field.

At step 960, the process 900 includes preventing user input to the non-tactical entry field while the aircraft travels through the predicted turbulence region.

At step 970, the process 900 includes identifying a tactical entry field that receives an entry while the aircraft travels through the predicted turbulence region and allowing user input to the tactical entry field while the aircraft travels through the predicted turbulence region. In various embodiments, responsive to the entry to the tactical entry field while the aircraft travels through the predicted turbulence region, providing an audible alert that identifies the tactical entry field. In various embodiments, responsive to the entry to the tactical entry field while the aircraft travels through the predicted turbulence region, displaying the tactical entry field and the entry to the tactical entry field on a forward display or a heads up display (HUD).

In some aspects, the techniques described herein relate to an aerial vehicle, including: a display device; a user input mechanism; and a controller configured during a mission to: predict a turbulence region along a flight path of the aerial vehicle (e.g., from radar measurements); prior to the aerial vehicle entering the predicted turbulence region, cause a font or color for a strategic entry field displayed on the display device that is predicted to need an entry using the user input mechanism while the aerial vehicle travels through the predicted turbulence region to appear different from a font or color for a non-strategic entry field displayed on the display device that is predicted to not need an entry using the user input mechanism while the aerial vehicle travels through the predicted turbulence region; provide an alert to enter the entry to the strategic entry field displayed on the display device prior to the aerial vehicle entering the predicted turbulence region; and prevent the user input mechanism from accepting an entry to the strategic entry field while the aerial vehicle travels through the predicted turbulence region.

In some aspects, the techniques described herein relate to an aerial vehicle, wherein, prior to the aerial vehicle entering the predicted turbulence region, the controller is configured to predict the fields that will need an entry while the aerial vehicle travels through the predicted turbulence region and prompt a user to enter the entry to the strategic entry fields.

In some aspects, the techniques described herein relate to an aerial vehicle, wherein the controller is further configured to determine the fields that will need an entry while the aerial vehicle travels through the predicted turbulence region and enable only those fields for data entry while the aerial vehicle travels through the predicted turbulence region.

In some aspects, the techniques described herein relate to an aerial vehicle, wherein the controller is further configured to: while the aerial vehicle travels through the predicted turbulence region: cause a font or color for a non-tactical entry field displayed on the display device that is predicted to not need an entry using the user input mechanism while the aerial vehicle travels through the predicted turbulence region to appear different from the font or color for a tactical entry field displayed on the display device that is predicted to need an entry using the user input mechanism while the aerial vehicle travels through the predicted turbulence region; prevent the user input mechanism from accepting an entry to the non-tactical entry field; and allow the user input mechanism to accept an entry to a tactical entry field displayed on the display device that is predicted to need an entry while the aerial vehicle travels through the predicted turbulence region.

In some aspects, the techniques described herein relate to an aerial vehicle, wherein the controller is further configured to: identify a tactical entry field that receives an entry while the aircraft travels through the predicted turbulence region; and responsive to the entry to the tactical entry field while the aircraft travels through the predicted turbulence region, provide an audible alert that identifies the tactical entry field.

In some aspects, the techniques described herein relate to an aerial vehicle, wherein the controller is further configured to: identify a tactical entry field that receives an entry while the aircraft travels through the predicted turbulence region; and responsive to the entry to the tactical entry field while the aircraft travels through the predicted turbulence region, provide a visual indication on a second display device that displays the tactical entry field and the entry to the tactical entry field.

In some aspects, the techniques described herein relate to an aerial vehicle, wherein the second display device includes a forward display or a heads up display (HUD).

In some aspects, the techniques described herein relate to an aerial vehicle, wherein to cause the font or color for a strategic entry field to appear different from the font or color for a non-strategic entry field, the controller is configured to change the font or color for the strategic entry field prior to the aerial vehicle entering the predicted turbulence region.

In some aspects, the techniques described herein relate to an aerial vehicle, wherein to cause the font or color for a non-tactical entry field to appear different from the font or color for a tactical entry field, the controller is configured to change the font or color for the non-tactical entry field.

In some aspects, the techniques described herein relate to an aerial vehicle, wherein to cause the font or color for a non-tactical entry field to appear different from the font or color for a tactical entry field, the controller is configured to change the font or color for the tactical entry field.

In some aspects, the techniques described herein relate to an aerial vehicle, including: an HMI (human machine interface) including a display device and a user input mechanism; and a controller configured during a mission to: predict a turbulence region along a flight path of the aerial vehicle (e.g., from radar measurements); and while the aerial vehicle travels through the predicted turbulence region: cause a font or color for a non-tactical entry field displayed on the display device that is predicted to not need an entry using the user input mechanism while the aerial vehicle travels through the predicted turbulence region to appear different from the font or color for a tactical entry field displayed on the display device that is predicted to need an entry using the user input mechanism while the aerial vehicle travels through the predicted turbulence region; prevent the user input mechanism from accepting an entry to the non-tactical entry field; and allow the user input mechanism to accept an entry to a tactical entry field displayed on the display device that is predicted to need an entry while the aerial vehicle travels through the predicted turbulence region.

In some aspects, the techniques described herein relate to an aerial vehicle, wherein the controller is further configured to: identify a tactical entry field that receives an entry while the aircraft travels through the predicted turbulence region; and responsive to the entry to the tactical entry field while the aircraft travels through the predicted turbulence region, provide an audible alert that identifies the tactical entry field.

In some aspects, the techniques described herein relate to an aerial vehicle, wherein the controller is further configured to: identify a tactical entry field that receives an entry while the aircraft travels through the predicted turbulence region; and responsive to the entry to the tactical entry field while the aircraft travels through the predicted turbulence region, provide a visual indication on a second display device that displays the tactical entry field and the entry to the tactical entry field.

In some aspects, the techniques described herein relate to an aerial vehicle, wherein the second display device includes a forward display or a heads up display (HUD).

In some aspects, the techniques described herein relate to an aerial vehicle, wherein to cause the font or color for a non-tactical entry field to appear different from the font or color for a tactical entry field, the controller is configured to change the font or color for the non-tactical entry field.

In some aspects, the techniques described herein relate to an aerial vehicle, wherein to cause the font or color for a non-tactical entry field to appear different from the font or color for a tactical entry field, the controller is configured to change the font or color for the tactical entry field.

In some aspects, the techniques described herein relate to an aerial vehicle, wherein the controller is further configured to: prior to the aerial vehicle entering the predicted turbulence region, change a visual property of a strategic entry field displayed on the HMI that is predicted to need an entry using the user input mechanism while the aerial vehicle travels through the predicted turbulence region; provide an alert to enter the entry to the strategic entry field displayed on the HMI prior to the aerial vehicle entering the predicted turbulence region; and prevent the user input mechanism from accepting an entry to the strategic entry field while the aerial vehicle travels through the predicted turbulence region.

In some aspects, the techniques described herein relate to a method in an aircraft during a mission, including: predicting a turbulence region along a flight path (e.g., from radar measurements); prior to the aircraft entering the predicted turbulence region, changing a visual property (e.g., font and/or color) of a strategic entry field displayed by an HMI (human machine interface) that is predicted to need an entry while the aircraft travels through the predicted turbulence region; alerting flight crew to enter the entry to the strategic entry field displayed by the HMI prior to the aircraft entering the predicted turbulence region; and preventing user input to the strategic entry field while the aerial vehicle travels through the predicted turbulence region.

In some aspects, the techniques described herein relate to a method, further including: while the aerial vehicle travels through the predicted turbulence region: causing a visual property (e.g., font and/or color) for a non-tactical entry field displayed on the HMI that is predicted to not need an entry while the aerial vehicle travels through the predicted turbulence region to appear different from a visual property (e.g., font and/or color) for a tactical entry field displayed on the HMI that is predicted to need an entry while the aerial vehicle travels through the predicted turbulence region; preventing user input to the non-tactical entry field while the aircraft travels through the predicted turbulence region; and allowing user input to the tactical entry field while the aircraft travels through the predicted turbulence region.

In some aspects, the techniques described herein relate to a method, further including: identifying a tactical entry field that receives an entry while the aircraft travels through the predicted turbulence region; and responsive to the entry to the tactical entry field while the aircraft travels through the predicted turbulence region, providing an audible alert that identifies the tactical entry field.

In some aspects, the techniques described herein relate to a method, further including: responsive to the entry to the tactical entry field while the aircraft travels through the predicted turbulence region, displaying the tactical entry field and the entry to the tactical entry field on a forward display or a heads up display (HUD).

In some aspects, the techniques described herein relate to a method, wherein causing a visual property for a non-tactical entry field to appear different from a visual property for a tactical entry field includes changing the font or color for the non-tactical entry field.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aerial vehicle, comprising:
a display device;
a user input mechanism; and
a controller configured during a mission to:
predict a turbulence region along a flight path of the aerial vehicle;
prior to the aerial vehicle entering the predicted turbulence region, cause a font or color for a strategic entry field displayed on the display device that is predicted to need an entry using the user input mechanism while the aerial vehicle travels through the predicted turbulence region to appear different from a font or color for a non-strategic entry field displayed on the display device that is predicted to not need an entry using the user input mechanism while the aerial vehicle travels through the predicted turbulence region;
provide an alert to enter the entry to the strategic entry field displayed on the display device prior to the aerial vehicle entering the predicted turbulence region; and
prevent the user input mechanism from accepting an entry to the strategic entry field while the aerial vehicle travels through the predicted turbulence region.

2. The aerial vehicle of claim 1, wherein the controller is further configured to:
while the aerial vehicle travels through the predicted turbulence region:
cause a font or color for a non-tactical entry field displayed on the display device that is predicted to not need an entry using the user input mechanism while the aerial vehicle travels through the predicted turbulence region to appear different from the font or color for a tactical entry field displayed on the display device that is predicted to need an entry using the user input mechanism while the aerial vehicle travels through the predicted turbulence region;
prevent the user input mechanism from accepting an entry to the non-tactical entry field; and
allow the user input mechanism to accept an entry to a tactical entry field displayed on the display device that is predicted to need an entry while the aerial vehicle travels through the predicted turbulence region.

3. The aerial vehicle of claim 2, wherein the controller is further configured to:
identify a tactical entry field that receives an entry while the aerial vehicle travels through the predicted turbulence region; and
responsive to the entry to the tactical entry field while the aerial vehicle travels through the predicted turbulence region, provide an audible alert that identifies the tactical entry field.

4. The aerial vehicle of claim 2, wherein the controller is further configured to:
identify a tactical entry field that receives an entry while the aerial vehicle travels through the predicted turbulence region; and
responsive to the entry to the tactical entry field while the aerial vehicle travels through the predicted turbulence region, provide a visual indication on a second display device that displays the tactical entry field and the entry to the tactical entry field.

5. The aerial vehicle of claim 1, wherein the controller is further configured to:
determine the fields that will need an entry while the aerial vehicle travels through the predicted turbulence region and enable only those fields for data entry while the aerial vehicle travels through the predicted turbulence region.

6. A method in an aerial vehicle during a mission, comprising:
predicting a turbulence region along a flight path;
prior to the aerial vehicle entering the predicted turbulence region, changing a visual property of a strategic entry field displayed by an HMI (human machine interface) that is predicted to need an entry while the aerial vehicle travels through the predicted turbulence region;
alerting flight crew to enter the entry to the strategic entry field displayed by the HMI prior to the aerial vehicle entering the predicted turbulence region; and
preventing user input to the strategic entry field while the aerial vehicle travels through the predicted turbulence region.

7. The method of claim 6, further comprising:
while the aerial vehicle travels through the predicted turbulence region: causing a visual property for a non-tactical entry field displayed on the HMI that is predicted to not need an entry while the aerial vehicle travels through the predicted turbulence region to appear different from a visual property for a tactical entry field displayed on the HMI that is predicted to need an entry while the aerial vehicle travels through the predicted turbulence region;
preventing user input to the non-tactical entry field while the aerial vehicle travels through the predicted turbulence region; and
allowing user input to the tactical entry field while the aerial vehicle travels through the predicted turbulence region.

8. The method of claim 6, further comprising:
identifying a tactical entry field that receives an entry while the aerial vehicle travels through the predicted turbulence region; and
responsive to the entry to the tactical entry field while the aerial vehicle travels through the predicted turbulence region, providing an audible alert that identifies the tactical entry field.

9. The method of claim 8, further comprising:
responsive to the entry to the tactical entry field while the aerial vehicle travels through the predicted turbulence region, displaying the tactical entry field and the entry to the tactical entry field on a forward display or a heads up display (HUD).

10. The method of claim 6, wherein causing a visual property for a non-tactical entry field to appear different from a visual property for a tactical entry field comprises changing a font or color for the non-tactical entry field.
